# EUROPEAN PATENT SPECIFICATION

(11) **EP 3 333 833 B1**
(45) Date of publication and mention of the grant of the patent: **23.03.2022**
(21) Application number: 16832898.7
(22) Date of filing: 28.07.2016
(51) Int. Cl.: G09B 23/30, G09B 23/32

(54) **TECHNIQUE SIMULATOR**
TECHNIKSIMULATOR
SIMULATEUR DE TECHNIQUE

(30) Priority: 03.08.2015 JP 2015153299; 14.07.2016 JP 2016139241
(43) Date of publication of application: 13.06.2018
(73) Proprietor: Terumo Kabushiki Kaisha, Tokyo 151-0072 (JP)
(72) Inventor: ISHIYAMA, Akemi, Ashigarakami-gun Kanagawa 259-0151 (JP); ISHIMORI, Motofumi, Ashigarakami-gun Kanagawa 259-0151 (JP); OZAKI, Kouji, Ashigarakami-gun Kanagawa 259-0151 (JP)
(74) Representative: Casalonga
(86) International application number: PCT/JP2016/072159
(87) International publication number: WO 2017/022619

(56) References cited:
- JP-A- 2004 508 589
- US-A1- 2004 033 477
- US-A1- 2009 311 662
- US-A1- 2011 256 519

## Description

### Technical Field

The present invention relates to a procedure simulator used for training in beating-heart coronary artery bypass grafting.

### Background

The present invention relates to a procedure simulator according to the preamble of claim 1, such as it is, e.g., known from US 2004/033477.

Recently, catheter treatment represented by coronary artery dilation or stent placement in which a catheter is utilized is applied to a patient having ischemic heart disease such as myocardial infarction. The catheter treatment is minimally invasive for a patient, but there may be possibility of restenosis and the catheter may not be applicable depending on a degree of stenosis.

On the other hand, there is also coronary artery bypass grafting (CABG) as a treatment method that can be used instead of the catheter treatment. In coronary artery bypass grafting, a thoracic region of a patient is opened to expose the heart, and a bypass blood vessel, to feed blood from another other blood vessel, is anastomosed to a coronary artery where the stenosis or occlusion is occurring. In the coronary artery bypass grafting, an on-pump CABG may cause extracorporeal circulation by using an artificial heart-lung machine. However, in the on-pump CABG, there may be risks such as a load on the heart due to cardiac arrest, functional deterioration of organs, and a decline of immunity.

Recently, beating-heart coronary artery bypass grafting, in which bypass surgery is performed with the heart beating (off-pump CABG), is performed to avoid such risks of the on-pump CABG. In the off-pump CABG, motion at only a portion where a coronary artery is sutured is stopped by using a medical apparatus called a stabilizer, and the surgery is performed with the heart beating. Since the off-pump CABG is an operative procedure with high technical difficulty, training is indispensable for a surgeon.

A procedure simulator, used for training doctors in off-pump CABG procedure, may be as described in Japanese Patent Applications JP 2013-83786 A and JP 2005-202267 A.

A blood vessel anastomosis training device may be as disclosed in Japanese Patent Application JP 2013-83786 A, which includes: a placing plate on which a blood vessel model is placed; and a plate driving unit that vertically moves the placing plate by utilizing air pressure, and beating of the heart is simulated by vertically moving the blood vessel model. A simulator for surgical surgery training may be as disclosed in Japanese Patent Application JP 2005-202267 A, which includes: an undulating means driven by a motor via a crank mechanism; and a simulated heart made of a soft resin and attached to the undulating means, and beating of the heart is simulated by providing movement to the simulated heart by the undulating unit.

### Summary

### Technical Problem:

In a blood vessel anastomosis training device, as disclosed in Japanese Patent Application JP 2013-83786 A, a blood vessel model that is an artificial object is moved only in a vertical direction, and therefore, provided is an atmosphere that is dissimilar to that of actual surgery and lacking reality. A simulated heart used in a simulator for surgical training, as disclosed in Japanese Patent Application JP 2005-202267 A, is an artificial object, and therefore, not only does the simulated heart have a texture significantly different from that of the heart of an actual human but there is no bleeding. Additionally, since the simulated heart is moved only by one undulating means, the motion of the beating of the heart is unrealistic. Meanwhile, as a training method without using a procedure simulator, considered is a method in which, for example, a living animal (pig or the like) is anesthetized and surgery is performed without stopping the heart thereof. However, there may be problems in this method because the procedure uses a living animal as an object and of the use of living animals is costly for both to purchase and to manage or the like.

The embodiments herein are made in view of the above-described problems, and directed to providing a procedure simulator in which procedure training in cardiac surgery can be performed in a situation having reality richer than the related art and has an atmosphere closer to that of actual surgery.

### Solution to Problem

To achieve the above objects, a procedure simulator according to claim 1 is characterized.

According to the procedure simulator having the above-described structure, the first balloon repeats expansion and contraction inside the left ventricle and the second balloon repeats expansion and contraction under flow action of the operating fluid by the pump system, thereby achieving simulation of beating of the heart. Also, since the blood is supplied to the coronary artery, the blood flows out when the coronary artery is cut. Therefore, according to this procedure simulator, it is possible to perform training in the off-pump CABG in a more realistic situation at low cost without using a living animal.

In the above-described procedure simulator, the blood supply unit includes three blood tubes adapted to be inserted into the three coronary arteries respectively.

With this structure, the blood can be surely supplied to the three coronary arteries.

In the above-described procedure simulator, further provided is a tube holder formed with a blood tube holding hole through which each of the three blood tubes is inserted, and the tube holder may be adapted to be arranged and fixed inside an aorta connected to the heart.

With this structure, the blood tube can be prevented from coming out of the coronary artery because the blood tube can be fixed to the heart.

In the above-described procedure simulator, a first tube in which the operating fluid flows may be connected to the first balloon, and the tube holder may include a first tube holding hole through which the first tube is inserted.

With this structure, the first balloon can be prevented from coming out of the left ventricle because the first tube can be fixed to the heart together with the blood tube.

In the above-described procedure simulator, an expandable and contractible expansion unit may be provided at a distal outer peripheral portion of the blood tube.

With this structure, the blood tube can be prevented from coming out of the coronary artery by making the expansion unit expand inside the coronary artery.

In the above-described procedure simulator, the pump system may include: a centrifugal pump having an inlet port and an outlet port; a first line that connects the first balloon to one of the inlet port and the outlet port of the centrifugal pump; and a second line that connects the second balloon to another one of the inlet port and the outlet port of the centrifugal pump, and operation timing of expansion and contraction may be deviated between the first balloon and the second balloon by the centrifugal pump repeating rotation and stop.

With this structure, both of the first balloon and the second balloon can be operated by one centrifugal pump. Additionally, movement of the heart can be made closer to actual beating, and reality can be further improved.

In the above-described procedure simulator, the first balloon may be formed larger than the second balloon, and a reservoir to store part of the operating fluid may be connected to the second line.

With this structure, the first balloon and the second balloon connected via the centrifugal pump can be appropriately operated.

In the above-described procedure simulator, further provided may be a non-permeable membrane-like member which is arranged around the heart in a manner at least existing below the heart, and simulates a pericardium.

With this structure, blood having bled from the coronary artery is accumulated in the membrane-like member and the blood comes to exist in a lower portion of the heart, and therefore, reality can be further improved.

In the above-described procedure simulator, further provided may be a casing including at least a side wall and an upper wall, having a size to house the heart, and having the upper wall formed with an opening portion to expose the heart.

With this structure, an image of a chest of a human undergoing thoracotomy is provided, and reality can be further improved.

In the above-described procedure simulator, further included may be a thoracotomy simulator that simulates thoracotomy, and the thoracotomy simulator may include: a stage to place the heart; a casing adapted to cover a periphery of the stage, including an upper wall, and having the upper wall provided with an opening portion in order to expose the heart; a pair of movable lid members provided at the opening portion and displaceable in a right-left direction so as to come close to each other and separate from each other; and an elastic member adapted to elastically bias the pair of movable lid members in a mutually closing direction.

With this structure, the pair of movable lid members, which can be displaced in the right-left direction and are biased by the elastic member in the closing direction, is arranged at the opening portion of the upper wall of the casing. Therefore, procedure training in a cardiac surgery can be performed from a step of setting (positioning) a rib retractor. Therefore, it is possible to provide an atmosphere closer to actual surgery. Furthermore, since a size of thoracotomy can be arbitrarily changed in accordance with preference of a trainee surgeon, it is possible to provide an environment (visual field) in which the trainee surgeon can easily perform training.

In the above-described procedure simulator, a gap may be formed between the pair of movable lid members in a state where the pair of movable lid members is closest to each other within a movable range.

With this structure, a rib retractor can be easily attached because the gap is formed between the pair of movable lid members in an initial state.

In the above-described procedure simulator, the elastic member may be formed of an elastic material in a ring shape and may be hooked at the pair of movable lid members.

Consequently, the elastic member can be implemented by a simple structure, and disassembly and cleaning can be easily performed.

In the above-described procedure simulator, further provided may be a stage to place the heart, in which the heart is a porcine heart, the stage includes a placement recessed portion formed in a manner conforming to an outer shape of the heart, and the heart is held in an orientation similar to an orientation of a human heart in a state where the simulated heart is placed in the placement recessed portion.

Since the porcine heart having a shape and a size close to the human heart is used, reality can be further improved. Additionally, anyone can easily place the porcine heart on the stage in the orientation similar to that of the human heart.

According to the procedure simulator of the present embodiments, procedure training in cardiac surgery can be performed in a situation having reality richer than the related art doing and having an atmosphere closer to that of actual surgery.

### Brief Description of Drawings

Fig. 1 is a schematic structural view of a procedure simulator according to embodiments of the present disclosure.
Fig. 2 is a cross-sectional view of each of a first balloon and a second balloon according to embodiments of the present disclosure.
Fig. 3 is a perspective view of a tube holder according to embodiments of the present disclosure.
Fig. 4 is a schematic view illustrating a state where the tube holder is fixed to an aorta according to embodiments of the present disclosure.
Fig. 5 is a schematic view illustrating a state where a heart covered with a membrane-like member is placed on a swing device and housed in a casing according to embodiments of the present disclosure.
Fig. 6 is an exploded perspective view of the casing according to embodiments of the present disclosure.
Fig. 7 is a perspective view of a thoracotomy simulator.
Fig. 8 is an exploded perspective view of the thoracotomy simulator according to embodiments of the present disclosure.
Fig. 9 is a cross-sectional view of a stage according to embodiments of the present disclosure.
Fig. 10 is an exploded perspective view of a lid portion, a pair of movable lid members, and an elastic member according to embodiments of the present disclosure.
Fig. 11 is a cross-sectional view of a state where a heart is set in the thoracotomy simulator according to embodiments of the present disclosure.
Fig. 12 is a plan view of a state where a rib retractor is set in the thoracotomy simulator according to embodiments of the present disclosure.
Fig. 13 is a cross-sectional view of the state where the rib retractor is set in the thoracotomy simulator according to embodiments of the present disclosure.

### Detailed Description

In the following, a procedure simulator according to the embodiments of the present disclosure will be described with reference to the drawings.

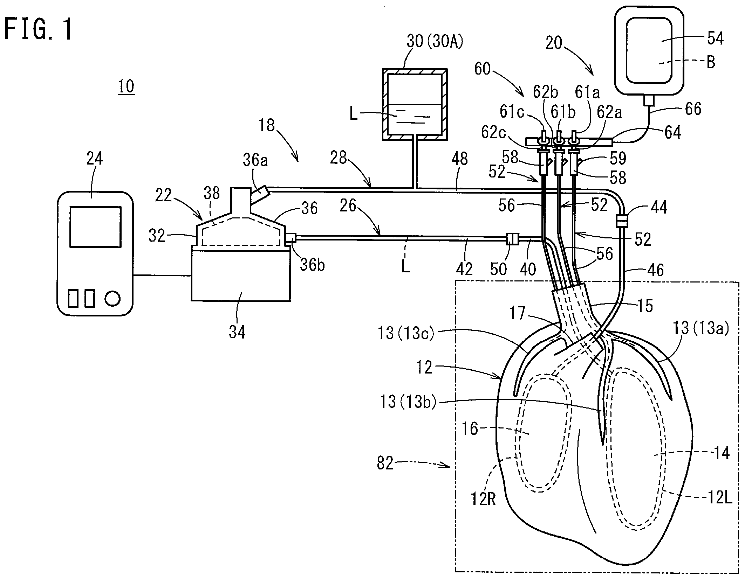

As illustrated in a schematic structural view in Fig. 1, a procedure simulator 10 according to embodiments of the present disclosure includes an animal heart 12, a first balloon 14 to be inserted into a left ventricle 12L of the heart 12, a second balloon 16 to be inserted into a right ventricle 12R of the heart 12, a pump system 18 that causes the first balloon 14 and the second balloon 16 to expand and contract, and a blood supply unit 20 that directly supplies blood B to coronary arteries 13 (left circumflex artery 13a, left anterior descending coronary artery 13b, and right coronary artery 13c) of the heart 12. The procedure simulator 10 is used when a surgeon performs training in off-pump CABG.

The heart 12 is used as a simulated heart of a human, for example, a mammalian heart can be exemplified. Particularly, a porcine heart can be the heart 12 for procedure training because the porcine heart has a structure and a size relatively close to those of the human heart. Furthermore, the porcine heart is relatively inexpensive and easy to obtain. Note that a heart of a mammal other than a pig, for example, a heart of a cow, a goat, a sheep, or the like may also be used as the heart 12.

The first balloon 14 and the second balloon 16 are bag-shaped members adapted to expand and contract in accordance with supply and discharge of operating fluid L. The first balloon 14 and the second balloon 16 can be made of a material having elastic retractility for smooth expansion and contraction (for example, a rubber material like silicone rubber or an elastomer material).

The first balloon 14 can be inserted into the left ventricle 12L of the heart 12 via an aorta 15 and is adapted to be able to simulate contraction motion of the left ventricle 12L of the heart 12 by expanding and contracting inside the left ventricle 12L. The second balloon 16 can be inserted into the right ventricle 12R of the heart 12 via a pulmonary artery 17 and is adapted to be able to simulate contraction motion of the right ventricle 12R of the heart 12 by expanding and contracting inside the right ventricle 12R. In the heart 12, the left ventricle 12L is larger than the right ventricle 12R. Therefore, the first balloon 14 is formed larger than the second balloon 16 in sizes (thickness and length) in both a natural state and an expanding state.

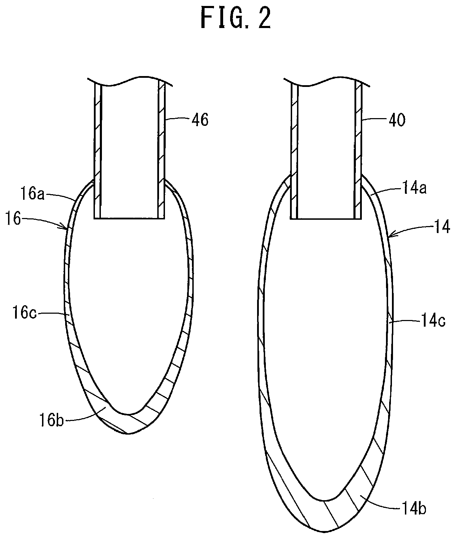

In Fig. 1, the first balloon 14 is connected to a first tube 40 constituting a liquid passage line in the pump system 18. As illustrated in Fig. 2, the first balloon 14 includes: a proximal end portion 14a to which the first tube 40 is connected; a distal end portion 14b that is an end portion on an opposite side of the proximal end portion 14a; and an intermediate portion 14c constituting a portion between the proximal end portion 14a and the distal end portion 14b. In the embodiments, the distal end portion 14b has a wall thickness thicker than wall thicknesses of the proximal end portion 14a and intermediate portion 14c. Consequently, the distal end portion 14b is harder (allows for less deformation) than the proximal end portion 14a and the intermediate portion 14c.

In Fig. 1, the second balloon 16 is connected to a second tube 46 constituting a liquid passage line in the pump system 18. As illustrated in Fig. 2, the second balloon 16 includes: a proximal end portion 16a to which the second tube 46 is connected; a distal end portion 16b that is an end portion on an opposite side of the proximal end portion 16a; and an intermediate portion 16c constituting a portion between the proximal end portion 16a and the distal end portion 16b. In embodiments, the distal end portion 16b has a wall thickness thicker than wall thicknesses of the proximal end portion 16a and intermediate portion 16c. Consequently, the distal end portion 16b is harder (allows for less deformation) than the proximal end portion 16a and the intermediate portion 16c.

With the first balloon 14 and the second balloon 16, the distal end portions 14b, 16b have hardness of 10° to 60°, or, in some embodiments, 30° to 40° in shore A hardness. Additionally, with the first balloon 14 and the second balloon 16, the proximal end portions 14a, 16a and the intermediate portions 14c, 16c have hardness of 0° to 40°, or, in some embodiments, 10° to 30° in the shore A hardness.

Thus, since the distal end portions 14b, 16b are made relatively hard and the proximal end portions 14a, 16a and the intermediate portions 14c, 16c are made relatively soft with the first balloon 14 and the second balloon 16, a cardiac apex of the heart 12 that inherently does not contract is prevented from being moved while contraction of the ventricle can be emphasized. Consequently, movement of the heart 12 can be made to better simulate the natural movement of the human heart.

Meanwhile, the first balloon 14 having the distal end portion 14b harder than the proximal end portion 14a and the intermediate portion 14c, may also be formed by joining the distal end portion 14b, formed of a relatively hard material to the proximal end portion 14a and the intermediate portion 14c formed of a relatively soft material. The second balloon 16 has the structure similar to that of the first balloon 14.

The first tube 40 is inserted into the first balloon 14. In other words, an end portion of the first tube 40 protrudes toward the distal end portion 14b inside the first balloon 14. Similarly, the second tube 46 is inserted into the second balloon 16. In other words, an end portion of the second tube 46 protrudes toward the distal end portion 16b inside the second balloon 16. Since the first tube 40 and the second tube 46 are thus structured, when the first balloon 14 and the second balloon 16 are pushed into the left ventricle 12L and the right ventricle 12R, the first balloon 14 and the second balloon 16 are prevented from being excessively collapsed, curved, and/or deformed, and insertion can be easily performed.

In Fig. 1, the pump system 18 includes a centrifugal pump 22, a controller 24 to control the centrifugal pump 22, a first line 26 that connects the first balloon 14 to the centrifugal pump 22, a second line 28 that connects the second balloon 16 to the centrifugal pump 22, and a reservoir 30 connected to the second line 28. The pump system 18 causes the first balloon 14 and the second balloon 16 to expand and contract by making the operating fluid L flow inside a circuit. The operating fluid L may be water. In the case where the operating fluid L is liquid, the texture of the heart felt by a trainee surgeon at the time of touching the heart is closer to that of a real heart.

The centrifugal pump 22 has a pump main body 32 and a drive unit 34 to drive the pump main body 32. The pump main body 32 includes: a housing 36 in which an inlet port 36a and an outlet port 36b are formed; and an impeller 38 arranged inside the housing 36 in a rotatable manner. During rotation of the impeller 38, the operating fluid L flowing into a center portion of the impeller 38 from the inlet port 36a flows toward an outer peripheral side of the impeller 38 while being accelerated by rotation of the impeller 38, and is discharged from the outlet port 36b.

The controller 24 controls the centrifugal pump 22 such that the operating fluid L flows between the centrifugal pump 22 and each of the first balloon 14 and the second balloon 16 so as to make the first balloon 14 and the second balloon 16 expand and contract via the operating fluid L. Specifically, the controller 24 controls the drive unit 34 of the centrifugal pump 22 such that the impeller 38 alternately repeats a rotation and then a stop in order that the beating of the heart 12 may be simulated by operation of the first balloon 14 and the second balloon 16.

The controller 24 may be a dedicated computer that stores a control program, or may be implemented by installing a control program in a general-purpose computer such as a PC.

The first line 26 is a tubular body constituting part of a fluid circuit in the pump system 18, has one end portion connected to the centrifugal pump 22, and has another end portion connected to the first balloon 14. In embodiments, the first line 26 has one end portion connected to the outlet port 36b of the centrifugal pump 22. The first line 26 includes the first tube 40 constituting the first balloon 14 side and a first pump side tube 42 constituting the centrifugal pump 22 side, and the first tube 40 and the first pump side tube 42 are connected via a connector 50.

The second line 28 is a tubular body constituting part of the fluid circuit in the pump system 18, has one end portion connected to the centrifugal pump 22, and has the other end portion connected to the second balloon 16. In embodiments, the second line 28 has one end portion connected to the inlet port 36a of the centrifugal pump 22. The second line 28 includes a second tube 46 constituting the second balloon 16 side and a second pump side tube 48 constituting the centrifugal pump 22 side, and the second tube 46 and the second pump side tube 48 are connected via a connector 44.

Meanwhile, in a different configuration, the first line 26 may have one end portion connected to the inlet port 36a of the centrifugal pump 22, and the second line 28 may have one end portion connected to the outlet port 36b of the centrifugal pump 22.

The reservoir 30 that stores part of the operating fluid L inside the circuit is connected to the intermediate portion constituting a portion between the one end portion and the other end portion of the second line 28. In Fig. 1, the reservoir 30 has a form of a tank 30A. In other configurations, the reservoir 30 may have a form of a balloon made of a material having elastic retractility, such as a rubber material.

The blood supply unit 20 is adapted and arranged so as to supply blood B to the three coronary arteries 13 (left circumflex artery 13a, left anterior descending coronary artery 13b, and right coronary artery 13c) of the heart 12 by height difference pressure. Specifically, in embodiments, the blood supply unit 20 includes: three blood tubes 52 adapted to be inserted into the three coronary arteries 13 respectively; and a blood bag 54 connected to the three blood tubes 52.

In embodiments, each blood tube 52 has a catheter form. In other words, the blood tube 52 includes: a long tubular body 56 having flexibility; and a hub 58 connected to a proximal end portion of the tubular body 56. The tubular body 56 is formed thinner than an inner diameter of the coronary artery 13 of the heart 12.

The hub 58 is connected to each of exit ports 62a to 62c of a triple stopcock 60, respectively. An entrance port 64 of the triple stopcock 60 is connected to the blood bag 54 via a tube 66. The triple stopcock 60 has three cocks 61a, 61b, 61c and is adapted such that a communication state between the blood bag 54 and the blood tube 52 can be switched between communication and interruption by individually rotating the cocks 61a, 61b, 61c.

The blood B contained in the blood bag 54 and to be supplied to the coronary artery 13 may be an artificial material or liquid, but can also be blood collected from an animal. Blood B can be blood of same animal from which the heart 12 was obtained. Therefore, in the case of using a porcine heart as the heart 12, it is possible to also use that animal's porcine blood. Note that the heart 12 and the blood B may also be of different animals.

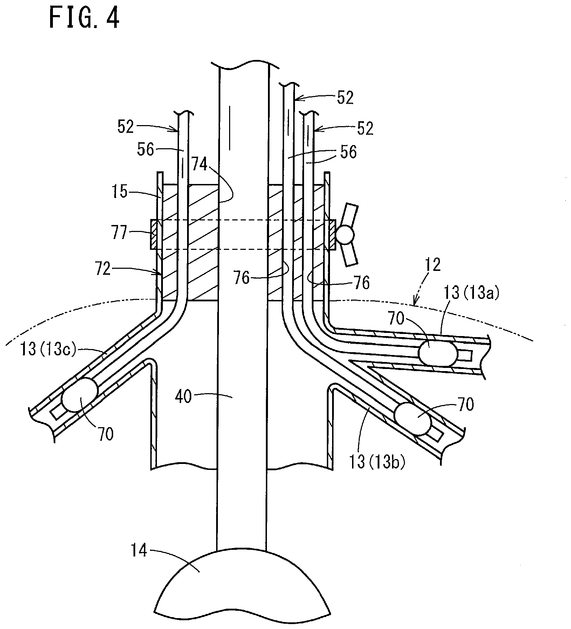

In embodiments, as illustrated in Fig. 4, the blood tube 52 further includes, as a balloon for fixation to the coronary artery 13, an expandable and contractible expansion unit 70 provided at a distal outer peripheral portion of the tubular body 56. The expansion unit 70 is formed of, for example, a material having elastic retractility (e.g., a rubber material, an elastomer material, or the like) and expands and contracts in accordance with a supply and discharge of expansion fluid (for example, air, water, or the like). In Fig. 4, the expansion unit 70 in an expanding state is illustrated.

When the expansion unit 70 expands inside the coronary artery 13, the distal end portion of the blood tube 52 (tubular body 56) is prevented from coming out of the coronary artery 13. Additionally, the blood B introduced into the coronary artery 13 via the blood tube 52 is prevented from leaking to the aorta 15 side. As illustrated in Fig. 1, the hub 58 is provided with an expanding port 59 connectable to a non-illustrated device (for example, a syringe) to supply and discharge the expansion fluid to and from the expansion unit 70. The expanding port 59 communicates with an inner cavity of the expansion unit 70 via a non-illustrated expanding lumen formed in the tubular body 56.

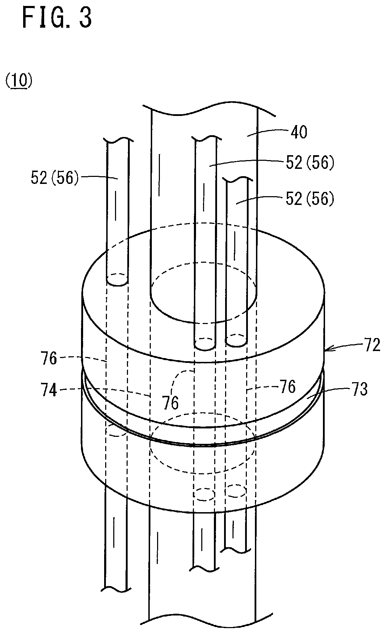

As illustrated in Fig. 3, the procedure simulator 10 further includes a tube holder 72 to fix the first tube 40 and the three blood tubes 52 to the aorta 15. The tube holder 72 can be formed of a soft material (such as a rubber material like silicone rubber or an elastomer material) that can be easily deformed when external force is applied.

In embodiments, the tube holder 72 has a cylindrical shape as a whole. In the tube holder 72, a first tube holding hole 74 through which the first tube 40 is inserted and a blood tube holding hole 76 through which the three blood tubes 52 (tubular bodies 56) are inserted are formed in a manner penetrating the holder 72 in an axial direction.

The first tube holding hole 74 is substantially circular and has a diameter substantially same as or slightly larger than an outer diameter of the first tube 40. In Fig. 3, the first tube holding hole 74 is provided substantially at a center of the tube holder 72. Note that the first tube holding hole 74 may also be provided at a position eccentric from the center of the tube holder 72. Each of the blood tube holding holes 76 have a shape substantially circular and have a diameter smaller than a diameter of the first tube holding hole 74 and equal to or slightly larger than an outer diameter of the tubular body 56.

In the tube holder 72, the three blood tube holding holes 76 may not be arranged at equal intervals in a circumferential direction but may be arranged in a manner conforming to arrangement of the three coronary arteries 13. Specifically, the two blood tube holding holes 76 are arranged close to each other, and the remaining one blood tube holding hole 76 is apart in the circumferential direction from the two blood tube holding holes 76 close to each other (for example, at an angle interval of 90° to 180°) .

During use of the procedure simulator 10, the tube holder 72 is arranged and fixed inside the aorta 15 close to the heart 12 in a state where the first tube 40 is inserted through the first tube holding hole 74 and the blood tube 52 is inserted through the blood tube holding hole 76 as illustrated in Fig. 4. For example, to fix the tube holder 72, a string-like or rope-like fastening member 77 is wound around an outer circumference of the tube holder 72 interposing the aorta 15 and fixes or ties up the tube holder 72. A plurality of fastening members 77 may also be used to fix the tube holder 72.

As illustrated in Fig. 3, a ring-shaped groove 73 extending in the circumferential direction of an outer circumferential surface of the tube holder 72 may also be provided to enhance the fixing force of the tube holder 72 to the aorta 15. In the case of using the plurality of fastening members 77, a plurality of grooves 73 may be provided at intervals in the axial direction.

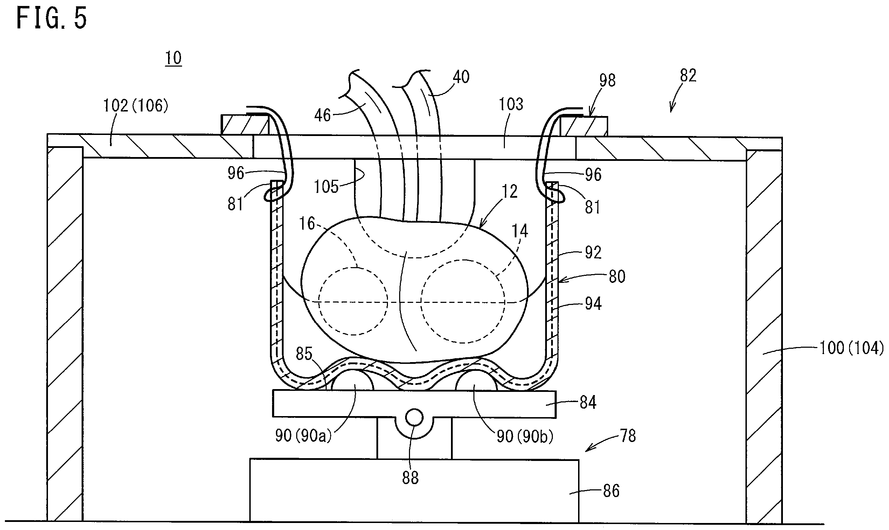

As illustrated in Fig. 5, the procedure simulator 10 can further include: a swing device 78 that swings the heart 12; a membrane-like member 80 that simulates a pericardium; the heart 12; and a casing 82 to house the swing device 78 and the membrane-like member 80.

The swing device 78 can include: a stage 84 on which the heart 12 is placed; and a main body portion 86 that swings the stage 84 in a seesaw-like manner. The stage 84 is supported by the main body portion 86 in a manner swingable around a swing shaft 88 and has a flat upper surface 85.

As illustrated in Fig. 5, a plurality of protrusions 90 (90a, 90b) may be provided on the upper surface 85 of the stage 84 to effectively swing the heart 12 along with the swinging of the stage 84 to emphasize movement (beating) of the heart 12. The plurality of protrusions 90 is arranged on one side and the other side which are horizontally displaced from the swing shaft 88. Consequently, the protrusion 90a on the one side and the protrusion 90b on the other side push up the heart 12 alternately along with swing of the stage 84, and therefore, the swinging of the stage 84 can be effectively transmitted to the heart 12.

The membrane-like member 80 is made of a flexible non-permeable member, can have retractility, and is arranged around the heart 12 in a manner at least below the heart 12 during use. The membrane-like member 80 has a lower portion at least formed in a bag shape such that a certain amount of blood B can be accumulated. With this structure, the membrane-like member 80 plays a role as a receiver for the blood B leaking from the coronary artery 13 during training in the procedure training.

In embodiments, the membrane-like member 80 is formed of an outer material 92 having elastic retractility and a mesh-like inner material 94 embedded in the outer material 92. The outer material 92 is, for example, a rubber material such as silicone rubber or an elastomer material. With this structure, the inner material 94 plays a role of a reinforcing body, and therefore, the membrane-like member 80 can be hung with a thread 96 and can be hooked and fixed to a rib retractor 98. Additionally, a height of the heart 12 or the like can be adjusted by changing a position where the thread 96 is passed through, and a trainee surgeon can more easily perform the procedure.

Note that the inner material 94 may be embedded only in an edge portion 81 of the membrane-like member 80 where the thread 96 is passed through. An entire portion of the membrane-like member 80 can be formed in a bag shape in an initial state because training in cutting the pericardium can also be performed.

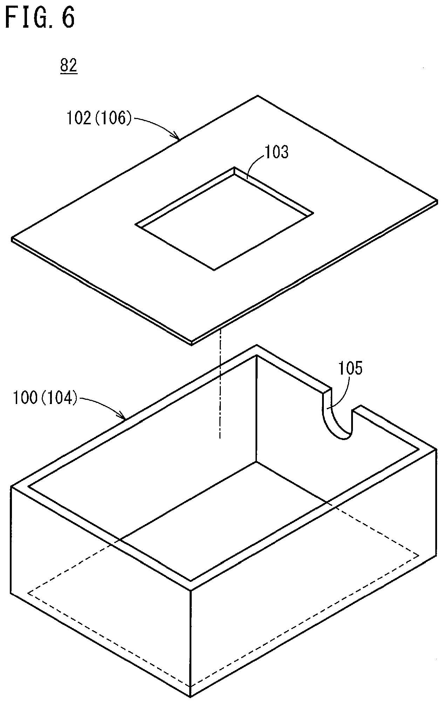

In Figs. 5 and 6, the casing 82 includes at least a side wall 100 and an upper wall 102, has a size to house the heart 12, and has the upper wall 102 formed with an opening portion 103 to expose the heart 12. In embodiments, the casing 82 includes: a cuboid trunk portion 104 having a top and a bottom opened; a rectangular lid portion 106 that can be separated from the trunk portion 104 and can partly close the upper opening of the trunk portion 104. The trunk portion 104 constitutes the side wall 100, and the lid portion 106 constitutes the upper wall 102.

A cut-away portion 105 to pass a tube-like member (first tube 40 and the like) is provided at an upper portion of the trunk portion 104. A substitute cut-away portion may be provided at the lid portion 106. Meanwhile, the trunk portion 104 and the lid portion 106 may have shapes other than those described above, for example, may have a shape of a polygon other than a quadrangular shape, such as a circle, an ellipse, or a quadrangle in a plan view.

The casing 82 can be formed of a material which is hard and excellent in water resistance and solvent resistance. Additionally, the casing 82 can have a certain weight by increasing a wall thickness thereof so as not to be easily displaced and moved even when pushed by an elbow or the like of a trainee surgeon during use. Also, the casing 82 can be formed of a transparent material such that an inner state can be confirmed during setup. Examples of a constituent material of the casing 82 can include, but are not limited to, vinyl chloride, polycarbonate, acrylic resin, glass, and the like.

Next, an example of a setup procedure for the procedure simulator 10 will be described.

Setup for the heart 12 is performed as follows, for example. The heart 12, which may be preliminarily frozen, is thawed, and the aorta 15 and the pulmonary artery 17 are cut into appropriate lengths to create entrances of the left ventricle 12L and the right ventricle 12R. To prevent leakage of blood B, each of a pulmonary vein and a large vein connected to the heart 12 is tied up with a thread (suture thread or the like) and closed.

Setup for the tube holder 72 is performed as follows, for example. The first tube 40 connected to the first balloon 14 is inserted through the first tube holding hole 74 of the tube holder 72, and also the three blood tubes 52 are inserted through the three blood tube holding holes 76, respectively.

Setup for the circuit is performed as follows, for example. The first balloon 14 is inserted into the left ventricle 12L via the aorta 15, and additionally the three blood tubes 52 are inserted into the three coronary arteries 13 (left circumflex artery 13a, left anterior descending coronary artery 13b, and right coronary artery 13c), respectively. In this case, each of the blood tubes 52 can be prevented from coming out of each of the coronary arteries 13 by making the expansion unit 70, provided at the distal end portion of the blood tube 52, expand inside each of the coronary arteries 13.

Next, the tube holder 72 is inserted into the aorta 15, and the tube holder 72 is fixed to the aorta 15 by being tied up with the fastening member 77 from the outside of the aorta 15. Consequently, the tube holder 72 is tightly fastened radially inward and slightly deformed, and therefore, the first tube 40 and the blood tube 52 are fixed to the first tube holding hole 74 and the blood tube holding hole 76, respectively. Therefore, the first tube 40 and the blood tube 52 are fixed to the aorta 15 via the tube holder 72.

Next, the second balloon 16 is inserted into the right ventricle 12R via the pulmonary artery 17, and the second tube 46 is fixed to the pulmonary artery 17 by tying up the outside of the pulmonary artery 17 with a fastening member such as a thread. Insertion and installation of the second balloon 16 into the right ventricle 12R may also be performed before insertion and installation of the first balloon 14 into the left ventricle 12L.

Next, the first line 26 is formed by connecting the first pump side tube 42, which may be filled with the operating fluid L to the first tube 40, which may be filled with the operating fluid L, and also the second line 28, which may be filled with the operating fluid L, is formed by connecting the second pump side tube 48, which may be filled with the operating fluid L, to the second tube 46, which may be filled with the operating fluid L. Consequently, a circuit on the left ventricle 12L side and a circuit on the right ventricle 12R side, which may be filled with the operating fluid L and in fluid communication via the centrifugal pump 22, are formed. The centrifugal pump 22 and the controller 24 are set in a manner such that desired beating can be simulated in the heart 12 (such that the first balloon 14 and the second balloon 16 are operated as desired).

The blood bag 54 is connected to the three blood tubes 52 via the triple stopcock 60. Then, the blood bag 54 is set at a position higher than the heart 12 (for example, being hung by a suitable hanger), thereby making the blood B flow into the three coronary arteries 13 by utilizing a height difference. At this point, since the expansion unit 70 provided at the distal end portion in each of the three blood tubes 52 expands inside each of the coronary arteries 13, the blood B can be prevented from flowing back to the aorta 15 side.

Setup for the heart 12 and the like into the casing 82 is performed as follows, for example. The swing device 78 is set inside the trunk portion 104 of the casing 82, the lid portion 106 is placed on the trunk portion 104, and the heart 12 covered with the membrane-like member 80 is placed on the stage 84 of the swing device 78 through the opening portion 103 provided at the lid portion 106. Next, the rib retractor 98 is attached to the opening portion 103 of the lid portion 106, and also the thread 96 passed through the edge portion 81 of the membrane-like member 80 is hooked at the rib retractor 98. Consequently, the membrane-like member 80 is hung and held in a shape that can function as a receiver. Next, a stabilizer not illustrated is attached to the rib retractor 98, and a peripheral portion of the coronary artery 13 to be anastomosed is fixed with the stabilizer so as not to be moved.

Next, the first balloon 14 and the second balloon 16 arranged in the left ventricle 12L and the right ventricle 12R of the heart 12 respectively are repeatedly made to expand and contract by turning on the swing device 78 to swing the heart 12 and also by actuating the centrifugal pump 22. Consequently, simulated beating is provided to the heart 12. With the above-described procedures, preparation for the training using the procedure simulator 10 is completed.

Next, operation and effects of the procedure simulator 10 will be described.

In the procedure simulator 10, since the centrifugal pump 22 is repeatedly rotated and stopped under the control of the controller 24, the first balloon 14 repeats expansion and contraction inside the left ventricle 12L of the heart 12 and also the second balloon 16 repeats expansion and contraction inside the right ventricle 12R of the heart 12.

Specifically, during rotation of the impeller 38 of the centrifugal pump 22, the operating fluid L is sucked from the second line 28 connected to the inlet port 36a while the operating fluid L is discharged to the first line 26 connected to the outlet port 36b. Therefore, the second balloon 16 in the right ventricle 12R contracts due to outflow of the operating fluid L while the first balloon 14 in the left ventricle 12L expands due to inflow of the operating fluid L. Note that the part of the operating fluid L inside the reservoir 30 flows into the second line 28 in this case.

On the other hand, when the impeller 38 is stopped from the state where the impeller 38 is rotated, the operating fluid L inside the first balloon 14 is pushed out to the first line 26 due to elastic resilience force of the first balloon 14, and the operating fluid L flows in a direction opposite to the direction while the impeller 38 is rotated. Consequently, the first balloon 14 and the second balloon 16 exhibit movement opposite to that while the impeller 38 is rotated. In other words, the first balloon 14 inside the left ventricle 12L contracts due to outflow of the operating fluid L while the second balloon 16 inside the right ventricle 12R expands due to inflow of the operating fluid L. Note that the part of the operating fluid L inside the second line 28 flows into the reservoir 30 in this case.

Thus, the first balloon 14 and the second balloon 16 repeat expansion and contraction at operation timing opposite to each other by the centrifugal pump 22 repeating rotation and stop. Consequently, movement close to actual heart beating is simulated in the heart 12. Additionally, since the heart 12 is swung by not only the swing device 78 but also the simulated beating by the first balloon 14 and the second balloon 16, movement is provided to an entire portion of the heart 12, and reality of beating is further improved.

Since the blood B is supplied to the coronary artery 13 from the blood supply unit 20, a trainee surgeon can experience bleeding from the coronary artery 13 in manner similar to actual surgery because the blood B flows out when the coronary artery 13 is cut. Since the discharged blood B is received by the membrane-like member 80, the swing device 78 arranged below the heart 12 is prevented from being stained with the blood B. Also, the blood B accumulated in the membrane-like member 80 provides further reality because the blood having bled is accumulated around the heart in actual surgery.

As described above, according to the procedure simulator 10, the first balloon 14 repeats expansion and contraction inside the left ventricle 12L and the second balloon 16 repeats expansion and contraction inside the right ventricle 12R under flow action of the operating fluid L by the pump system 18, thereby achieving simulation of beating of the heart 12. Since the blood B is supplied to the coronary artery 13, the blood B flows out when the coronary artery 13 is cut. Therefore, according to the procedure simulator 10, training in the off-pump CABG can be performed in a more realistic situation at low cost without using a living animal.

Meanwhile, in the case of performing training in a cardiac surgery by using a living animal, frequency to stop the heart during procedure training is high, and it is difficult to stably perform the training. Moreover, it is practically difficult to provide treatment to all of the three coronary arteries because a burden on the heart is so heavy that the heart cannot stand such treatment. In contrast, in the case of using the procedure simulator, not only a bypass procedure can be performed for all of the three coronary arteries 13a, 13b and 13c but also vascular anastomosis training can be performed at a plurality of locations of one coronary artery.

Also, in embodiments, since the blood supply unit 20 has the three blood tubes 52 adapted to be inserted into the three coronary arteries 13a, 13b and 13c respectively, the blood B can be surely supplied to the three coronary arteries 13a, 13b and 13c. Moreover, since the three blood tubes 52 can be fixed to the heart 12 by the tube holder 72, each of the blood tubes 52 can be prevented from coming out of the coronary artery 13. Additionally, since the first tube 40 can also be fixed to the heart 12 together with the blood tube 52 by the tube holder 72, the first balloon 14 can be prevented from coming out of the left ventricle 12L.

In embodiments, the expandable and contractible expansion unit 70 is provided at the distal outer peripheral portion of the blood tube 52, and the blood tube 52 can be prevented from coming out of the coronary artery 13 by making the expansion unit 70 expand inside the coronary artery 13.

Furthermore, in embodiments, the pump system 18 includes: the centrifugal pump 22 having the inlet port 36a and the outlet port 36b; the first line 26 that connects the first balloon 14 to one of the inlet port 36a and the outlet port 36b of the centrifugal pump 22, and the second line 28 that connects the second balloon 16 to the other one of the inlet port 36a and the outlet port 36b of the centrifugal pump 22. Additionally, operation timing of expansion and contraction is deviated between the first balloon 14 and the second balloon 16 by the centrifugal pump 22 repeating rotation and stop. With this structure, both of the first balloon 14 and the second balloon 16 can be operated by one centrifugal pump 22. Additionally, movement of the heart 12 can be made closer to actual beating, and reality can be further improved.

Particularly, the reservoir 30 to store the part of the operating fluid L is connected to the second line 28. With this structure, the first balloon 14 and the second balloon 16 connected via the centrifugal pump 22 can be appropriately operated.

In embodiments, since swing movement is provided to the heart 12 not only by the swing device 78 but also by operation of the first balloon 14 and the second balloon 16, movement of the heart 12 is more emphasized. Therefore, movement of the heart 12 can be made closer to actual beating.

In embodiments, since the blood B having bled from the coronary artery 13 is accumulated in the membrane-like member 80 and the blood B comes to exist at a lower portion of the heart 12, reality can be further improved. The casing 82 provides an image of a chest of a human undergoing thoracotomy, and reality can be further improved.

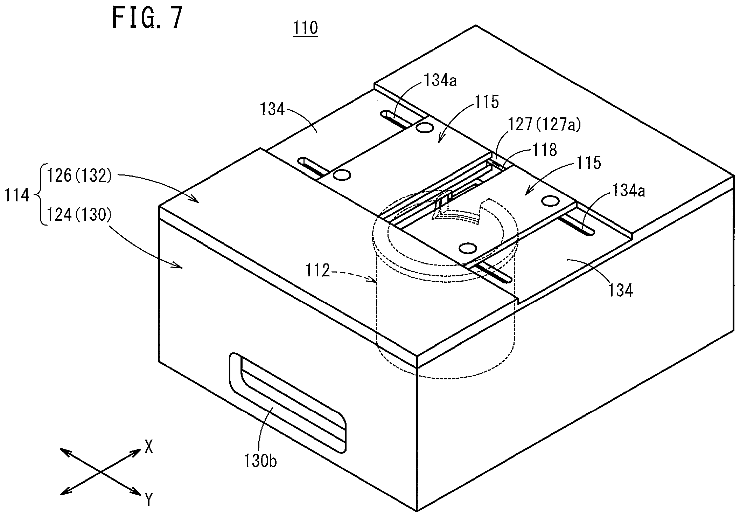

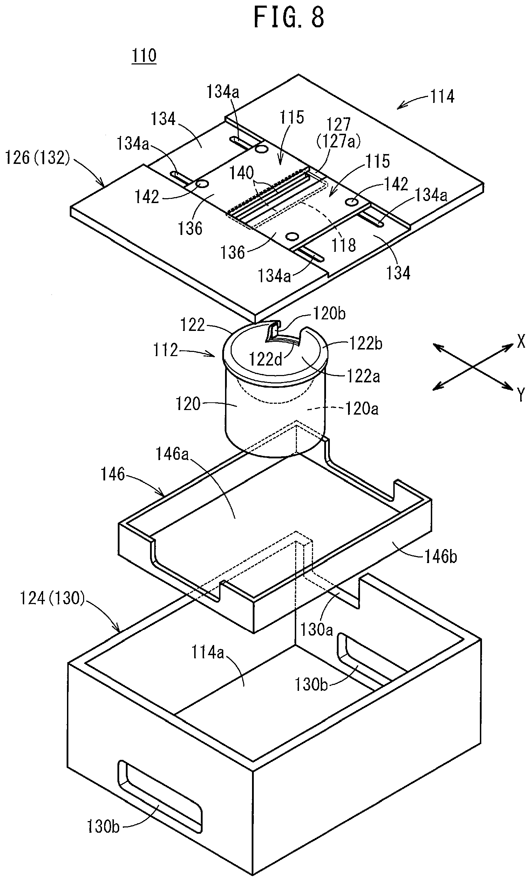

In the above-described procedure simulator 10, a thoracotomy simulator 110 simulating thoracotomy illustrated in Figs. 7 and 8 may be adopted instead of the casing 82 illustrated in Figs. 5 and 6. The thoracotomy simulator 110 includes: a stage 112 to place the heart 12; a casing 114 that surrounds a periphery of the stage 112; a pair of movable lid members 115 provided at the casing 114 in a movable manner; and an elastic member 118 that elastically biases the movable lid members 115.

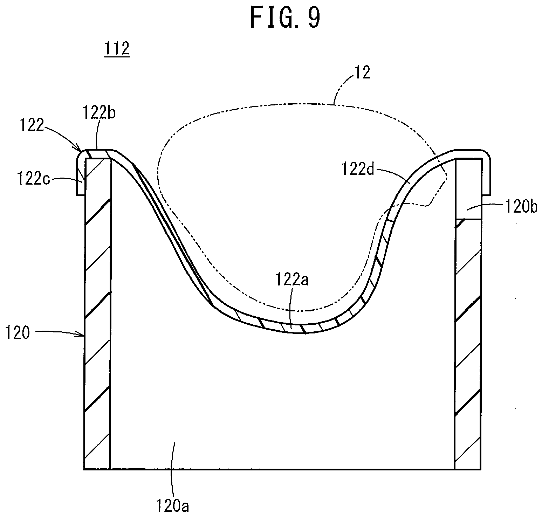

As illustrated in Figs. 8 and 9, the stage 112 includes: a base 120 formed of a hard material; and a receiving member 122 made of a soft resin and provided with a placement recessed portion 122a. In embodiments, the base 120 is formed in a hollow cylindrical shape. Note that the base 120 may also be formed in a polygonal cylindrical shape. The base 120 may be formed in a solid cylindrical shape. As illustrated in Fig. 9, the base 120 has a vertically-penetrating hollow portion 120a. As illustrated in Figs. 8 and 9, a cut-away portion 120b is partly provided in a circumferential direction at an upper portion of the base 120. The cut-away portion 120b penetrates a peripheral wall of the base 120 in a thickness direction and has a groove shape opened upward.

Examples of a constituent material of the base 120 can include vinyl chloride, polycarbonate, an acrylic resin, glass, and the like.

The receiving member 122 is formed in a manner detachable from the upper portion of the base 120. Note that the receiving member 122 may also be fixed to the upper portion of the base 120. The receiving member 122 includes: the placement recessed portion 122a to place the heart 12 in a predetermined posture: and a peripheral edge portion 122b provided around the placement recessed portion 122a, and the receiving member is formed in a substantially circular shape in a plan view.

The placement recessed portion 122a is recessed downward like a bowl shape and is formed in a manner conforming to an outer shape of the heart 12. In other words, the placement recessed portion 122a is formed in a manner conforming to a lower shape of the heart 12 when the heart 12 is oriented in a posture similar to a posture when a front side (thoracic side) of the human heart is oriented upward. The placement recessed portion 122a can be shaped by taking a mold from an animal heart 12 (porcine heart in the case where the heart 12 is the porcine heart) and then using this mold. The placement recessed portion 122a is arranged inside the hollow portion 120a of the base 120 in a state where the receiving member 122 is attached (placed) to the base 120.

The peripheral edge portion 122b protrudes radially outward from an upper outer peripheral edge of the placement recessed portion 122a. The receiving member 122 is supported by the base 120 by the peripheral edge portion 122b being placed (hooked) on the upper end portion of the base 120. A ring-shaped protrusion 122c protruding downward is provided at an outer end portion of the peripheral edge portion 122b. The ring-shaped protrusion 122c covers an outer circumferential surface of the upper end portion of the base 120 in a state where the receiving member 122 is attached to the base 120.

A cut-away portion 122d is partly provided in the circumferential direction at an upper portion of the receiving member 122. The cut-away portion 122d is provided from an upper portion to the peripheral edge portion of the placement recessed portion 122a. Examples of a constituent material of the receiving member 122 can include a rubber material such as silicone rubber, and an elastomer material, and/or the like.

As illustrated in Fig. 8, the casing 114 includes at least side wall 124 (peripheral wall) and an upper wall 126, also has a size to house the stage 112 on which the heart 12 is placed, and has the upper wall 126 formed with an opening portion 127 to expose the heart 12. Specifically, in embodiments, the casing 114 includes: a cuboid trunk portion 130 having a top and a bottom opened; a rectangular lid portion 132 that can be separated from the trunk portion 130 and can partly close the upper opening of the trunk portion 130. The trunk portion 130 constitutes the side wall 124, and the lid portion 132 constitutes the upper wall 126.

A cut-away portion 130a to pass a tube-like member (first tube 40 and the like) is provided at the upper portion of the trunk portion 130. A substitute cut-away portion may be provided at the lid portion 132. A through hole 130b is provided at each of the walls facing each other in the trunk portion 130. The through hole 130b is provided at a position lower than the cut-away portion 130a. The through hole 130b can be used as a finger hook hole in which an operator inserts a finger at the time of moving the trunk portion 130. Note that the trunk portion 130 and the lid portion 132 may have shapes other than those described above, and may be, for example, a polygonal shape other than a quadrangular shape, such as a circle, an ellipse, or a quadrangle in a plan view.

The casing 114 (trunk portion 130 and lid portion 132) can be formed of a material that is hard and excellent in water resistance and solvent resistance. Furthermore, the casing 114 can have a certain weight by increasing a wall thickness thereof so as not to be easily displaced and moved even when pushed by an elbow or the like of a trainee surgeon during use. Also, the casing 114 can be formed of a transparent material such that an inner state can be confirmed during setup. Examples of a constituent material of the casing 114 can include vinyl chloride, polycarbonate, acrylic resin, glass, and the like.

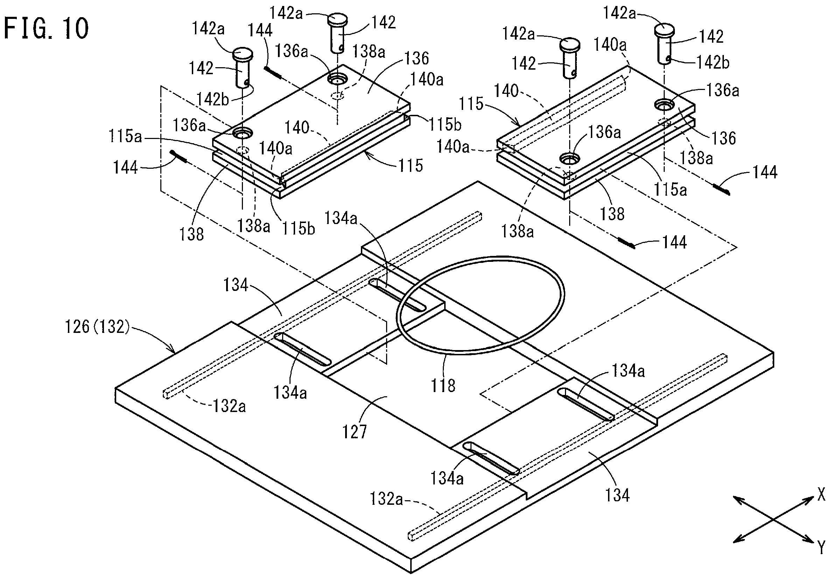

As illustrated in Fig. 10, the opening portion 127 penetrates the lid portion 132 in a thickness direction substantially at a center of the lid portion 132. The opening portion 127 is formed in a quadrangular shape in a plan view (a rectangular shape in the illustrated example). A slide support portion 134 having a thickness thinner than those of other portions in the lid portion 132 is provided on each of both left and right sides of the opening portion 127.

A long-hole like guide hole 134a extending in a right-left direction (direction of arrow Y) is provided in each of the slide support portions 134. The guide hole 134a penetrates the slide support portion 134 in a thickness direction. In each of the slide support portions 134, a plurality of guide holes 134a (two in the illustrated example) is provided at intervals in a horizontal direction (direction of arrow X) orthogonal to the right-left direction.

A positioning protrusion 132a protruding downward is provided in the vicinity of an outer peripheral portion of a lower surface of the lid portion 132 to prevent positional displacement of the lid portion 132 when the lid portion 132 is placed on the trunk portion 130. Meanwhile, instead of providing the positioning protrusion 132a, the above-described function to prevent positional displacement may also be provided by forming a step by making a portion other than the outer peripheral portion of the lower surface of the lid portion 132 (a portion more inner than the outer peripheral portion) protrude downward.

As illustrated in Fig. 8, the pair of movable lid members 115 is provided at the opening portion 127 of the lid portion 132 in a manner displaceable in the right-left direction in which the movable lid members come close to or separate from each other. Specifically, the pair of movable lid members 115 is respectively supported by the above-described slide support portions 134 of the lid portion 132 in a manner slidable in the right-left direction. The pair of movable lid members 115 has the same shape and is symmetrically arranged. In the following, note that the direction in which the pair of movable lid members 115 comes close to each other may be referred to as "inner side in an opening/closing direction", and the direction in which the pair of movable lid members 115 is separate from each other may be referred to as "outer side in the opening/closing direction".

As illustrated in Fig. 10, each of the movable lid members 115 includes an upper plate 136, a lower plate 138, and a coupling portion 140 that couples the upper plate 136 to the lower plate 138. The upper plate 136 and the lower plate 138 are formed in a rectangular shape in a plan view. The upper plate 136 is provided with an upper hole portion 136a that penetrates the upper plate 136 in a thickness direction. In the upper plate 136, a plurality of upper hole portions 136a (two in the illustrated example) is provided at intervals in the horizontal direction (direction of arrow X) orthogonal to the right-left direction.

The lower plate 138 is provided with a lower hole portion 138a that penetrates the lower plate 138 in a thickness direction. In the lower plate 138, a plurality of lower hole portions 138a (two in the illustrated example) is provided at intervals in the horizontal direction (direction of arrow X) orthogonal to the left and right direction. The upper hole portion 136a and the lower hole portion 138a are provided at the same position in a plan view.

The coupling portion 140 couples the upper plate 136 to the lower plate 138 at an end portion on a side where the left and right movable lid members 115 face each other (inner side in the opening/closing direction). A gap (hereinafter referred to as a "groove portion 115a") is formed between the upper plate 136 and the lower plate 138 by a thickness of the coupling portion 140. In other words, a lower surface of the upper plate 136 and an upper surface of the lower plate 138 face each other interposing the groove portion 115a. The lower surface of the upper plate 136 and the upper surface of the lower plate 138 are parallel to each other. In the movable lid member 115, the groove portion 115a is opened outward at a portion other than the coupling portion 140.

The coupling portion 140 extends in the horizontal direction (direction of arrow X) orthogonal to the right-left direction. The coupling portion 140 has a length shorter than lengths of the upper plate 136 and the lower plate 138. Consequently, in the movable lid member 115, recessed grooves 115b each opened in a direction in which the pair of the movable lid members 115 faces each other (inner side in the opening/closing direction) are formed on both sides in the extending direction of the coupling portion 140. Additionally, an inclined portion 140a is provided in each of both end portions in the extending direction of the coupling portion 140, and the inclined portion is more inclined to the inner side in the opening/closing direction as approaching closer to an outer side in the extending direction. A curved portion may also be provided instead of the inclined portion 140a.

The movable lid member 115 is attached to the lid portion 132 in a manner such that the slide support portion 134 is arranged between the upper plate 136 and the lower plate 138 (in the groove portion 115a). In a state where the movable lid member 115 is attached to the lid portion 132, a guide pin 142 having a flange portion 142a is inserted into the upper hole portion 136a, guide hole 134a, and lower hole portion 138a, and a retaining pin 144 is inserted a pin hole 142b of the guide pin 142. Consequently, the movable lid member 115 is prevented from falling off from the slide support portion 134. The movable lid member 115 can be detached from the lid portion 132 by pulling out the retaining pin 144 from the guide pin 142 and pulling out the guide pin 142 from the movable lid member 115.

The movable lid member 115 and the guide pin 142 are integrally displaced in the right-left direction (direction of arrow Y). Therefore, the movable lid member 115 is displaceable in the right-left direction with respect to the lid portion 132 within a movable range where the guide pin 142 is regulated by the guide hole 134a.

When the guide pin 142 is positioned at an end portion on the inner side in the opening/closing direction of the guide hole 134a (on the opening portion 127 side), the pair of movable lid members 115 is in a most closed state (close to each other). When the guide pin 142 is positioned at an end potion on the outer side in the opening/closing direction of the guide hole 134a (opposite side of the opening portion 127), the pair of movable lid members 115 is in a most opened state (separate from each other). In other words, the guide hole 134a defines the movable range of the movable lid members 115. As illustrated in Figs. 7 and 8, a gap 127a is formed between the pair of movable lid members 115 in a state where the pair of movable lid members 115 is in the most closed state.

In Fig. 8, the elastic member 118 elastically biases the pair of movable lid members 115 in a mutually closing direction. In embodiments, the elastic member 118 is formed in a ring shape by using a material having elastic retractility (elastic materials such as a rubber material or an elastomer material). The ring-shaped elastic member 118 may also be formed by mutually connecting end portions of a string-like or rope-like member formed of an elastic material.

In Fig. 8, the elastic member 118 is attached to the pair of movable lid members 115. In other words, a part of the elastic member 118 is inserted into the groove portion 115a of one of the movable lid members 115 (refer to Fig. 10) and also hooked at the coupling portion 140, and a remaining part of the elastic member 118 is inserted into the groove portion 115a of the other movable lid member 115 and also hooked at the coupling portion 140. A portion of the elastic member 118 extending between the pair of movable lid members 115 is exposed to the opening portion 127 via the recessed groove 115b (refer to Fig. 10).

The pair of movable lid members 115 is elastically biased in the mutually closing direction by the elastic member 118 thus structured and arranged. Therefore, in a state where wide opening force is not applied to the pair of movable lid members 115, the pair of movable lid members 115 is in the most closed state as illustrated in Fig. 8.

Note that the elastic member 118 may have a form of a spring (coil spring or the like) instead of the ring-shaped structure made of the elastic material described above. In this case, a shared spring may be provided for the pair of movable lid members 115, and the pair of movable lid members 115 may be biased in the closing direction by the shared spring. Alternatively, an individual spring may be provided in each of the pair of movable lid members 115, and the pair of movable lid members 115 may be respectively biased in the closing direction by the individual springs.

As illustrated in Fig. 8, in embodiments, the thoracotomy simulator 110 further includes an inner tray 146. The inner tray 146 has a structure that can be housed inside the casing 114 (trunk portion 130) and can place the stage 112. Specifically, the inner tray 146 includes a bottom wall 146a and a peripheral wall 146b protruding upward from an outer peripheral portion of the bottom wall 146a, and is opened upward. The inner tray 146 is smaller than an inner peripheral shape of the trunk portion 130 and larger than an outer periphery shape of the stage 112 in a plan view. In Fig. 4, the inner tray 146 is formed in a quadrangular shape similar to the trunk portion 130 of the casing 114 in a plan view, but may also be formed in another shape.

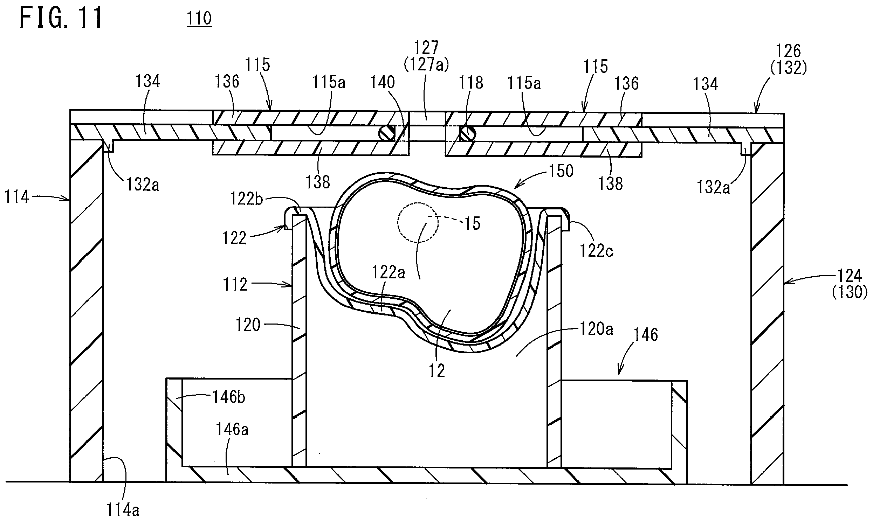

In the case where the thoracotomy simulator 110 is adopted in the procedure simulator 10 illustrated in Fig. 1, the heart 12 is placed inside the thoracotomy simulator 110 as illustrated in Fig. 11 by performing setup for the thoracotomy simulator 110. The setup is performed as follows, for example.

The trunk portion 130 of the casing 114 is placed on an operating table, the inner tray 146 is arranged inside the trunk portion 130, and the stage 112 is placed on the inner tray 146.

In this case, the stage 112 having the receiving member 122 placed on the upper portion of the base 120 may be placed on the inner tray 146, or the base 120 may be placed on the inner tray 146 first and then the receiving member 122 may be placed on the upper portion of the base 120.

The trunk portion 130 of the casing 114 may also be placed on the operating table after placing the inner tray 146 and the stage 112 on the operating table. At the time of placing the receiving member 122 on the upper portion of the base 120, a circumferential position of the cut-away portion 120b of the base 120 and a circumferential position of the cut-away portion 122d of the receiving member 122 are aligned with each other.

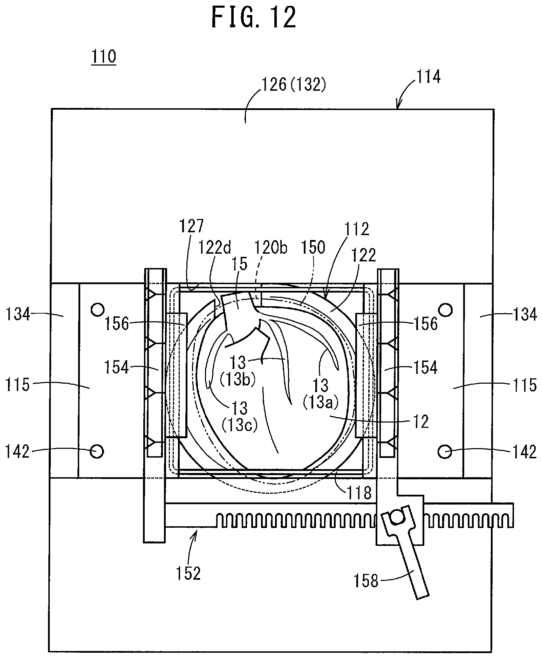

Next, the heart 12 is placed in the placement recessed portion 122a of the stage 112 (receiving member 122) in a desired orientation. At this point, the heart 12 is placed in a manner such that a posture thereof becomes similar to a posture when a front side (thoracic region side) of the human heart is oriented upward. In this case, the posture of the heart 12 is stabilized when the heart 12 is placed in the placement recessed portion 122a in an orientation in which the heart 12 naturally enters the placement recessed portion 122a along the shape of the placement recessed portion 122a. Therefore, the heart 12 can be easily placed in the placement recessed portion 122a in an appropriate orientation. Meanwhile, the aorta 15 is arranged at the cut-away portion 120b of the base 120 and at the cut-away portion 122d of the receiving member 122 (refer to Fig. 12).

As illustrated in Fig. 11, a membrane-like member 150 that simulates a pericardium can be used in the thoracotomy simulator 110. The membrane-like member 150 is made of a flexible non-permeable member, and can have retractility. Additionally, an entire portion of the membrane-like member 150 can be formed in a bag shape in an initial state to cover the heart 12 as illustrated in Fig. 11. The membrane-like member 150 may adopt a structure similar to that of the above-described membrane-like member 80 (refer to Fig. 5).

Next, the lid portion 132 having the pair of movable lid members 115 attached thereto is placed on the trunk portion 130. Consequently, the heart 12 is placed in the thoracotomy simulator 110 as illustrated in Fig. 11. Meanwhile, a position of the stage 112 is adjusted in advance such that a position of the heart 12 inside the casing 114 is arranged below the opening portion 127 (below the pair of the movable lid members 115 which is closed). In Fig. 11, the pair of movable lid members 115 is in the most closed state by the elastic biasing force of the elastic member 118. With the above-described procedures, the setup for the thoracotomy simulator 110 is completed.

Next, the first balloon 14 and the second balloon 16 respectively arranged in the left ventricle 12L and the right ventricle 12R of the heart 12 are made to repeatedly expand and contract by actuating the centrifugal pump 22 illustrated in Fig. 1. Consequently, simulated beating is provided to the heart 12. Meanwhile, setup for the procedure simulator 10 in the case of adopting the thoracotomy simulator 110 is the same as the setup for the procedure simulator 10 in which the casing 82 is adopted, except for the above-described setup for the thoracotomy simulator 110.

Next, a training method for cardiac surgery using the procedure simulator 10 in the case of adopting the thoracotomy simulator 110 will be described.

As illustrated in Fig. 12, a trainee surgeon (trainee) sets the rib retractor 152 in the thoracotomy simulator 110. Specifically, two arms 154 of the rib retractor 152 are first made to a most closed state, and a hook 156 provided in each of the two arms 154 is inserted into the gap 127a between the pair of movable lid members 115 (refer to Fig. 11). This gap 127a simulates a small gap formed when a sternum is incised in actual surgery. Then, a mutual interval between the two arms 154 is widened (the two arms 154 are opened) by rotating a lever 158.

Consequently, the pair of movable lid members 115 is widely opened in the right-left direction against elastic biasing force of the elastic member 118. Since the pair of movable lid members 115 is opened by the rib retractor 152 as described above, thoracotomy in thoracic surgery is simulated. Since the pair of movable lid members 115 is biased by the elastic member 118, it is possible to reproduce resistance force felt by a trainee surgeon at the time of actually opening the incised sternum. Furthermore, in this case, an opened degree of the pair of movable lid members 115 can be arbitrarily adjusted in accordance with preference of the trainee surgeon. Actually, an exposed degree of the heart, namely, an opened degree of a thoracic region is different depending on a proficiency level of a trainee surgeon and a treatment range. Since provided is a structure in which the opened degree of the movable lid members 115 can be arbitrarily adjusted, application to various trainee surgeons can be achieved.

When the pair of movable lid members 115 is opened by the rib retractor 152, the heart 12 (the heart 12 covered with the membrane-like member 150 which is the simulated pericardium) is exposed through the opening portion 127, and a state of thoracotomy is simulated. At this point, since an image of a human chest undergoing thoracotomy is provided and also simulated beating is provided to the heart 12 by the pump system 18 (Fig. 1), reality is more increased.

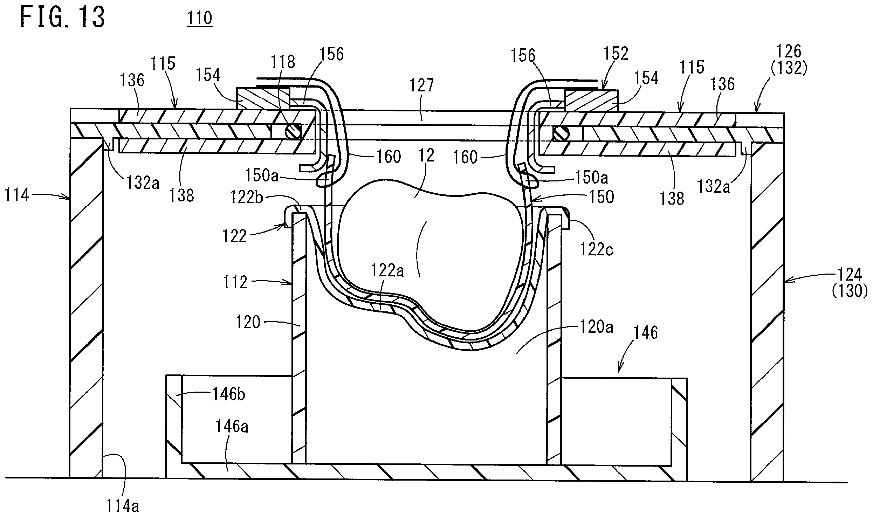

Next, the trainee surgeon cuts and opens the bag-shaped membrane-like member 150 by using an appropriate cutting instrument (a scalpel or the like) via the opening portion 127 and exposes the heart 12. Consequently, training in cutting the pericardium can be performed. Next, as illustrated in Fig. 13, the trainee surgeon passes a thread 160 through an edge portion 150a of the cut and opened membrane-like member 150 and then hooks and fixes the thread 160 at the arm 154 of the rib retractor 152.

In the state illustrated in Fig. 13, the membrane-like member 150 is arranged in a manner surrounding a periphery of the heart 12 except for an upper portion thereof, and at least a lower portion of the membrane-like member is formed in a bag shape so as to be able to accumulate a certain amount of the blood B. With this structure, the membrane-like member 150 plays a role as a receiver for the blood B leaking from the coronary artery 13 (refer to Fig. 1) during procedure training.

Next, the trainee surgeon attaches a non-illustrated stabilizer to the rib retractor 152 and fixes, with the stabilizer, the peripheral portion of the coronary artery 13 to be anastomosed so as not to be moved. Then, the trainee surgeon performs predetermined treatment (off-pump CABG) for the heart 12. Consequently, training in the treatment can be performed.

In this case, according to the thoracotomy simulator 110, the pair of movable lid members 115, which can be displaced in the right-left direction and are biased by the elastic member 118 in the mutually closing direction, is arranged at the opening portion 127 of the upper wall 126 of the casing 114. Therefore, procedure training in a cardiac surgery can be performed from a step of setting (positioning) the rib retractor 152. Therefore, it is possible to provide an atmosphere closer to actual surgery. Furthermore, since a size of thoracotomy can be arbitrarily changed in accordance with preference of a trainee surgeon, it is possible to provide an environment (visual field) in which the trainee surgeon can easily perform training.

In this thoracotomy simulator 110, the gap 127a is formed between the pair of movable lid members 115 in the state that the pair of movable lid members 115 is closest to each other within the movable range (refer to Figs. 7 and 8). With this structure, the rib retractor 152 (refer to Fig. 12) can be easily set because the gap 127a is formed between the pair of movable lid members 115 in the initial state.

In this thoracotomy simulator 110, the elastic member 118 is formed of an elastic material in a ring shape and hung at the pair of movable lid members 115. Consequently, the elastic member 118 can be implemented by a simple structure, and disassembly and cleaning can be easily performed.

In this thoracotomy simulator 110, the elastic member 118 extends between the pair of movable lid members 115 at both end portions in the horizontal direction (arrow X direction) orthogonal to the opening/closing direction of the pair of movable lid members 115. With this structure, the elastic member 118 does not become obstructive during the procedure training.

In this thoracotomy simulator 110, the stage 112 includes the placement recessed portion 122a formed in a manner conforming to the outer shape of the heart 12, and the heart 12 is held in the orientation similar to that of a human heart in a state where the heart 12 is placed in the placement recessed portion 122a. With this structure, anyone can easily place the heart 12 on the stage 112 in the orientation similar to that of the human heart.

In this thoracotomy simulator 110, the stage 112 includes: the base 120 formed of a hard material; and the receiving member 122 made of a soft resin and provided with the placement recessed portion 122a, and the receiving member can be attached to the upper portion of the base 120 or fixed to the same upper portion (refer to Figs. 8 and 9). With this structure, since an individual shape difference of the heart 12 is absorbed by the receiving member 122 made of the soft resin, the heart 12 can be stably held in the predetermined orientation, and also the heart 12 can be stably supported by the hard base 120.

In this thoracotomy simulator 110, the casing 114 has a lower opening portion 114a that allows passage of the stage 112 (refer to Fig. 8). With this structure, setup for the thoracotomy simulator 110 can be easily performed because the casing 114 can be set after placing the stage 112 on an operating table.

The thoracotomy simulator 110 can further include the inner tray 146 which can be housed inside the casing 114 and can place the stage 112 (refer to Fig. 8). With this structure, the blood B can be received by the inner tray 146, and cleaning after use becomes easy.

In this thoracotomy simulator 110, since the blood B flowing out from the heart 12 is received by the membrane-like member 150, the stage 112 can be prevented from being stained with the blood B. Also, the blood B accumulated in the membrane-like member 150 provides further reality because the blood having bled is accumulated around the heart 12 in actual surgery.

## Claims

1. A procedure simulator (10) comprising;
an animal heart (12) used as a simulated heart of a human;
an expandable and contractible first balloon (14) configured to be inserted into a left ventricle (12L) of the heart (12);
an expandable and contractible second balloon (16) configured to be inserted into a right ventricle (12R) of the heart (12); and
a pump system (18) configured to cause operating fluid (L) to flow between the first balloon (14) and the second balloon (16) and make the first balloon (14) and the second balloon (16) expand and contract via the operating fluid (L);
**characterized by** the procedure simulator (10) further comprising
a blood supply unit (20) configured to directly supply blood to three coronary arteries (13) of the heart (12), wherein
the blood supply unit (20) includes three blood tubes (52) configured to be inserted into the three coronary arteries (13) respectively.

2. The procedure simulator (10) according to claim 1, further comprising a tube holder (72) formed with a blood tube holding hole (76) through which each of the three blood tubes (52) is inserted,
wherein the tube holder (72) is configured to be arranged and fixed inside an aorta (15) connected to the heart (12).

3. The procedure simulator (10) according to claim 2, wherein
a first tube (40) in which the operating fluid (L) flows is connected to the first balloon (14), and
the tube holder (72) includes a first tube holding hole (74) through which the first tube (40) is inserted.

4. The procedure simulator (10) according to any one of claims 1 to 3, wherein an expandable and contractible expansion unit (70) is provided at a distal outer peripheral portion of the blood tube (52).

5. The procedure simulator (10) according to claim 1, wherein
the pump system (18) includes a centrifugal pump (22) having an inlet port (36a) and an outlet port (36b), a first line (26) that connects the first balloon (14) to one of the inlet port (36a) and the outlet port (36b) of the centrifugal pump (22), and a second line (28) that connects the second balloon (16) to another one of the inlet port (36a) and the outlet port (36b) of the centrifugal pump (22), and
operation timing of expansion and contraction is deviated between the first balloon (14) and the second balloon (16) by the centrifugal pump (22) repeating rotation and stop.

6. The procedure simulator (10) according to claim 5, wherein
the first balloon (14) is formed larger than the second balloon (16), and
a reservoir (30) to store part of the operating fluid (L) is connected to the second line (28).

7. The procedure simulator (10) according to any one of claims 1 to 6, further comprising a non-permeable membrane-like member (80, 150) which is arranged around the heart (12) in a manner at least existing below the heart (12), and simulates a pericardium.

8. The procedure simulator (10) according to any one of claims 1 to 7, further comprising a casing (82) including at least a side wall (100) and an upper wall (102), having a size to house the heart (12), and having the upper wall (102) formed with an opening portion (103) to expose the heart (12).

9. The procedure simulator (10) according to any one of claims 1 to 7, further comprising a thoracotomy simulator (110) that simulates thoracotomy,
wherein the thoracotomy simulator (110) includes:
a stage (112) to place the heart (12);
a casing (114) configured to cover a periphery of the stage (112), including an upper wall (126), and having the upper wall (126) provided with an opening portion (127) in order to expose the heart (12);
a pair of movable lid members (115) provided at the opening portion (127) and displaceable in a right-left direction so as to come close to each other and separate from each other; and
an elastic member (118) configured to elastically bias the pair of movable lid members (115) in a mutually closing direction.

10. The procedure simulator (10) according to claim 9, wherein a gap (127a) is formed between the pair of movable lid members (115) in a state where the pair of movable lid members (115) is closest to each other within a movable range.

11. The procedure simulator (10) according to claim 9 or 10, wherein the elastic member (118) is formed of an elastic material in a ring shape and is hung at the pair of movable lid members (115).

12. The procedure simulator (10) according to any one of claims 1 to 8, further comprising a stage (112) to place the heart (12),
wherein
the heart (12) is an animal heart, and
the stage (112) includes a placement recessed portion (122a) formed in a manner conforming to an outer shape of the heart (12), and the heart (12) is held in an orientation similar to a human heart in a state where the simulated heart is placed in the placement recessed portion (122a).

## Patentansprüche

1. Verfahrenssimulator (10), umfassend:
ein tierisches Herz (12), das als ein simuliertes Herz eines Menschen verwendet wird;
einen ausdehnbaren und zusammenziehbaren ersten Ballon (14), der so konfiguriert ist, dass er in eine linke Herzkammer (12L) des Herzens (12) eingeführt werden kann;
einen ausdehnbaren und zusammenziehbaren zweiten Ballon (16), der so konfiguriert ist, dass er in eine rechte Herzkammer (12R) des Herzens (12) eingeführt werden kann; und
ein Pumpensystem (18), das so konfiguriert ist, dass es bewirkt, dass Betriebsfluid (L) zwischen dem ersten Ballon (14) und dem zweiten Ballon (16) fließt und den ersten Ballon (14) und den zweiten Ballon (16) sich über das Betriebsfluid (L) ausdehnen und zusammenziehen lässt;
**dadurch gekennzeichnet, dass** der Verfahrenssimulator (10) ferner umfasst
eine Blutversorgungseinheit (20), die so konfiguriert ist, dass sie drei Koronararterien (13) des Herzens (12) direkt mit Blut versorgt, wobei
die Blutversorgungseinheit (20) drei Blutschläuche (52) aufweist, die so konfiguriert sind, dass sie entsprechend in die drei Koronararterien (13) eingeführt werden können.

2. Verfahrenssimulator (10) nach Anspruch 1, ferner umfassend einen Schlauchhalter (72), der mit einem Blutschlauchhalteloch (76) ausgebildet ist, durch das jeder der drei Blutschläuche (52) eingeführt wird,
wobei der Schlauchhalter (72) so konfiguriert ist, dass er innerhalb einer mit dem Herzen (12) verbundenen Aorta (15) angeordnet und befestigt ist.

3. Verfahrenssimulator (10) nach Anspruch 2, wobei
ein erster Schlauch (40), in dem das Betriebsfluid (L) fließt, mit dem ersten Ballon (14) verbunden ist, und der Schlauchhalter (72) ein erstes Schlauchhalteloch (74) aufweist, durch das der erste Schlauch (40) eingeführt ist.

4. Verfahrenssimulator (10) nach einem der Ansprüche 1 bis 3, wobei eine ausdehnbare und zusammenziehbare Ausdehnungseinheit (70) an einem distalen äußeren Umfangsabschnitt des Blutschlauches (52) vorgesehen ist.

5. Verfahrenssimulator (10) nach Anspruch 1, wobei
das Pumpensystem (18) eine Kreiselpumpe (22), die eine Eintrittsöffnung (36a) und eine Austrittsöffnung (36b) aufweist, eine erste Leitung (26), die den ersten Ballon (14) entweder mit der Eintrittsöffnung (36a) oder der Austrittsöffnung (36b) der Kreiselpumpe (22) verbindet, und eine zweite Leitung (28), die den zweiten Ballon (16) mit einer anderen der Eintrittsöffnung (36a) und der Austrittsöffnung (36b) der Kreiselpumpe (22) verbindet, umfasst, und
der Betriebszeitpunkt des Ausdehnens und des Zusammenziehens zwischen dem ersten Ballon (14) und dem zweiten Ballon (16) durch das sich wiederholende Drehen und Stillstehen der Kreiselpumpe (22) verschoben ist.

6. Verfahrenssimulator (10) nach Anspruch 5, wobei
der erste Ballon (14) größer ausgebildet ist als der zweite Ballon (16), und
ein Reservoir (30) zum Speichern eines Teils des Betriebsfluids (L) mit der zweiten Leitung (28) verbunden ist.

7. Verfahrenssimulator (10) nach einem der Ansprüche 1 bis 6, ferner umfassend ein nicht durchlässiges, membranartiges Element (80, 150), das um das Herz (12) herum in einer Weise angeordnet ist, dass es mindestens unterhalb des Herzens (12) vorhanden ist und das einen Herzbeutel simuliert.

8. Verfahrenssimulator (10) nach einem der Ansprüche 1 bis 7, ferner umfassend ein Gehäuse (82), das mindestens eine Seitenwand (100) und eine obere Wand (102) umfasst, das eine Größe aufweist, um das Herz (12) aufzunehmen, und wobei die obere Wand (102) mit einem Öffnungsabschnitt (103) ausgebildet ist, um das Herz (12) freizulegen.

9. Verfahrenssimulator (10) nach einem der Ansprüche 1 bis 7, ferner umfassend einen Thorakotomie-Simulator (110), der eine Thorakotomie simuliert,
wobei der Thorakotomie-Simulator (110) umfasst:
ein Gestell (112) zum Platzieren des Herzens (12);
ein Gehäuse (114), das so konfiguriert ist, dass es einen Umfang des Gestells (112) abdeckt, das eine obere Wand (126) aufweist, und wobei die obere Wand (126) mit einem Öffnungsabschnitt (127) versehen ist, um das Herz (12) freizulegen;
ein Paar beweglicher Deckelelemente (115), die an dem Öffnungsabschnitt (127) vorgesehen und in einer Rechts-Links-Richtung verschiebbar sind, um sich einander anzunähern und voneinander zu trennen; und
ein elastisches Element (118), das so konfiguriert ist, dass es das Paar beweglicher Deckelelemente (115) in eine sich gegeneinander schließende Richtung elastisch vorspannt.

10. Verfahrenssimulator (10) nach Anspruch 9, wobei ein Spalt (127a) zwischen dem Paar beweglicher Deckelelemente (115) in einem Zustand gebildet wird, in dem das Paar beweglicher Deckelelemente (115) innerhalb eines beweglichen Bereichs am nächsten zueinander ist.

11. Verfahrenssimulator (10) nach Anspruch 9 oder 10, wobei das elastische Element (118) aus einem elastischen Material in einer Ringform gebildet ist und an dem Paar beweglicher Deckelelemente (115) aufgehängt ist.

12. Verfahrenssimulator (10) nach einem der Ansprüche 1 bis 8, ferner umfassend ein Gestell (112) zum Platzieren des Herzens (12),
wobei
das Herz (12) ein tierisches Herz ist, und
das Gestell (112) einen vertieften Platzierungsabschnitt (122a) aufweist, der in einer Weise ausgebildet ist, die mit einer äußeren Form des Herzens (12) übereinstimmt, und das Herz (12) in einem Zustand, in dem das simulierte Herz in dem vertieften Platzierungsabschnitt (122a) platziert ist, in einer einem menschlichen Herzen ähnlichen Ausrichtung gehalten wird.

## Revendications

1. Simulateur d'intervention (10) comprenant ;
un cœur d'animal (12) utilisé comme cœur simulé d'un humain ;
un premier ballonnet (14) pouvant se dilater et se contracter configuré pour être inséré dans un ventricule gauche (12L) du cœur (12) ;
un second ballonnet (16) pouvant se dilater et se contracter configuré pour être inséré dans un ventricule droit (12R) du cœur (12) ; et
un système de pompe (18) configuré pour amener un fluide de travail (L) à s'écouler entre le premier ballonnet (14) et le second ballonnet (16) et faire en sorte que le premier ballonnet (14) et le second ballonnet (16) se dilatent et se contractent via le fluide de travail (L) ; **caractérisé par le fait que** le simulateur d'intervention (10) comprend en outre
une unité d'apport sanguin (20) configurée pour apporter directement du sang à trois artères coronaires (13) du cœur (12), dans lequel
l'unité d'apport sanguin (20) comporte trois tubes de sang (52) configurés pour être insérés dans les trois artères coronaires (13) respectivement.

2. Simulateur d'intervention (10) selon la revendication 1, comprenant en outre un support de tubes (72) doté d'un trou de support de tube de sang (76) à travers lequel chacun des trois tubes de sang (52) est inséré,
dans lequel le support de tubes (72) est configuré pour être agencé et fixé à l'intérieur d'une aorte (15) reliée au cœur (12).

3. Simulateur d'intervention (10) selon la revendication 2, dans lequel
un premier tube (40) dans lequel le fluide de travail (L) s'écoule est relié au premier ballonnet (14), et
le support de tubes (72) comporte un premier trou de support de tube (74) à travers lequel le premier tube (40) est inséré.

4. Simulateur d'intervention (10) selon l'une quelconque des revendications 1 à 3, dans lequel une unité de dilatation (70) pouvant se dilater et se contracter est fournie au niveau d'une portion périphérique extérieure distale du tube de sang (52).

5. Simulateur d'intervention (10) selon la revendication 1, dans lequel
le système de pompe (18) comporte une pompe centrifuge (22) ayant un port d'entrée (36a) et un port de sortie (36b), une première conduite (26) qui relie le premier ballonnet (14) à l'un parmi le port d'entrée (36a) et le port de sortie (36b) de la pompe centrifuge (22), et une seconde conduite (28) qui relie le second ballonnet (16) à un autre parmi le port d'entrée (36a) et le port de sortie (36b) de la pompe centrifuge (22), et
un moment d'opération de la dilatation et la contraction est dévié entre le premier ballonnet (14) et le second ballonnet (16) par la pompe centrifuge (22) répétant une rotation et un arrêt.

6. Simulateur d'intervention (10) selon la revendication 5, dans lequel
le premier ballonnet (14) est formé plus grand que le second ballonnet (16), et
un réservoir (30) pour stocker une partie du fluide de travail (L) est relié à la seconde conduite (28).

7. Simulateur d'intervention (10) selon l'une quelconque des revendications 1 à 6, comprenant en outre un élément semblable à une membrane non perméable (80, 150) qui est agencé autour du cœur (12) d'une manière au moins existant en dessous du cœur (12), et simule un péricarde.

8. Simulateur d'intervention (10) selon l'une quelconque des revendications 1 à 7, comprenant en outre un boîtier (82) comportant au moins une paroi latérale (100) et une paroi supérieure (102), ayant une taille pour abriter le cœur (12), et ayant la paroi supérieure (102) dotée d'une portion d'ouverture (103) pour exposer le cœur (12).

9. Simulateur d'intervention (10) selon l'une quelconque des revendications 1 à 7, comprenant en outre un simulateur de thoracotomie (110) qui simule une thoracotomie, dans lequel le simulateur de thoracotomie (110) comporte :
un étage (112) pour placer le cœur (12) ;
un boîtier (114) configuré pour couvrir une périphérie de l'étage (112), comportant une paroi supérieure (126), et ayant la paroi supérieure (126) pourvue d'une portion d'ouverture (127) afin d'exposer le cœur (12) ;
une paire d'éléments couvercles mobiles (115) fournis au niveau de la portion d'ouverture (127) et pouvant être déplacés dans une direction droite-gauche de manière à se rapprocher l'un de l'autre et se séparer l'un de l'autre ; et
un élément élastique (118) configuré pour entraîner élastiquement la paire d'éléments couvercles mobiles (115) dans une direction mutuellement fermante.

10. Simulateur d'intervention (10) selon la revendication 9, dans lequel un interstice (127a) est formé entre la paire d'éléments couvercles mobiles (115) dans un état où la paire d'éléments couvercles mobiles (115) est la plus proche l'un de l'autre dans une plage mobile.

11. Simulateur d'intervention (10) selon la revendication 9 ou 10, dans lequel l'élément élastique (118) est constitué d'une matière élastique en forme d'anneau et est accroché au niveau de la paire d'éléments couvercles mobiles (115).

12. Simulateur d'intervention (10) selon l'une quelconque des revendications 1 à 8, comprenant en outre un étage (112) pour placer le cœur (12),
dans lequel
le cœur (12) est un cœur d'animal, et
l'étage (112) comporte une portion de placement en creux (122a) formée d'une manière qui est conforme à une forme extérieure du cœur (12), et le cœur (12) est supporté dans une orientation similaire à un cœur humain dans un état où le cœur simulé est placé dans la portion de placement en creux (122a).
